# EUROPEAN PATENT SPECIFICATION

(11) **EP 3 675 652 B1**
(45) Date of publication and mention of the grant of the patent: **20.08.2025**
(21) Application number: 17787252.0
(22) Date of filing: 11.09.2017
(51) Int. Cl.: A23B 7/00

(54) **METHOD FOR FOOD PASTEURIZATION**
VERFAHREN ZUR PASTEURISIERUNG VON LEBENSMITTELN
PROCÉDÉ DE PASTEURISATION D'ALIMENTS

(30) Priority: 31.08.2017 IT 201700098045
(43) Date of publication of application: 08.07.2020
(73) Proprietor: Universita' Degli Studi Di Padova, 35122 Padova (IT)
(72) Inventor: SPILIMBERGO, Sara, 31100 Treviso (IT); ZAMBON, Alessandro, 36030 Costabissara (VI) (IT); MICHELINO, Filippo, 30027 San Donà di Piave (VE) (IT); POLATO, Stefano, 35047 Solesino (PD) (IT)
(74) Representative: Di Bernardo, Antonio
(86) International application number: PCT/IB2017/055465
(87) International publication number: WO 2019/043442

(56) References cited:
- WO-A1-03/070025
- GB-A- 2 519 135
- GB-A- 2 519 135
- US-A1- 2005 089 610
- MEUJO D A F ET AL: "Reducing oyster-associated bacteria levels using supercritical fluid CO2 as an agent of warm pasteurization", INTERNATIONAL JOURNAL OF FOOD MICROBIOLOGY, ELSEVIER BV, NL, vol. 138, no. 1-2, 31 March 2010 (2010-03-31), pages 63 - 70, XP026920560, ISSN: 0168-1605, [retrieved on 20091120], DOI: 10.1016/J.IJFOODMICRO.2009.11.012
- DATABASE BIOSIS [online] BIOSCIENCES INFORMATION SERVICE, PHILADELPHIA, PA, US; May 2008 (2008-05-01), ZHONG QIXIN ET AL: "Nonthermal inactivation of Escherichia coli K-12 on spinach leaves, using dense phase carbon dioxide", XP002775541, Database accession no. PREV200800418188

## Description

### TECHNICAL FIELD

The present invention relates to food pasteurization processes, and particularly to low temperature pasteurization processes.

### PRIOR ART

Pasteurization is a process applied to food products for inactivating microorganisms and enzymes to make the product safe from pathogenic bacteria. The reduction of the activity of bacteria and enzymes leads to an increase of the product life (shelf-life), which is, from the industrial perspective, essential for marketing, transporting and storing food products.

Currently the most used pasteurization technique is the thermal one that provides food being treated to be exposed to temperatures above 60°C. However the use of heat causes inevitable changes in texture, color and flavor of the fresh product. Heat particularly causes thermosensitive molecules to be spoiled with a consequent reduction of nutritive properties of the product.

In order to overcome such drawbacks of thermal pasteurization, new technologies have been studied able to pasteurize food at low temperature. One of such technologies is based on high pressure processes (HHP High Hydrostatic Pressure) that employs hydrostatic pressures from 500 MPa to 10000 MPa and temperatures close to room temperature. The high hydrostatic pressure is able to reduce microbial population, however, the process is very expensive and it cannot be used to treat some types of fresh products that would be irreversibly spoiled while being reduced to pulp.

Still with reference to processes using high hydrostatic pressures (HHP - High Hydrostatic Process), a solution is also known from [5] that provides to use high pressures in combination with a mixture of gases, among which also CO₂ may be present, in a packaging containing food. In order to obtain an effective bactericidal effect, [5] discloses the use of pressures higher than 50 MPa. Even though pressures, disclosed as necessary to obtain a good pasteurization, are lower than 500 MPa, however they are such to spoil many types of food products.

Another known pasteurization process provides to use supercritical fluids. Supercritical carbon dioxide (CO₂) and nitrous oxide (N₂O) are able to inactivate microorganisms and enzymes and are a valid alternative for food pasteurization at low temperature and at pressures at least one order of magnitude lower than HHP.

Known processes using CO₂ in supercritical state, however, have some drawbacks that are a strong barrier to industrialization. Generally, supercritical CO₂ is produced by using a pressurized plant and it is applied (or mixed, in case of liquids) to the product in the same reaction chamber before being packaged, but this exposes the product to the risk of contamination during packaging. In order to avoid such contamination, therefore, a very expensive, aseptic packaging system is necessary.

Pasteurization processes using supercritical CO₂ are disclosed by [34] and [35].

In prior art it has been suggested also to pack the product with a gas permeable film before subjecting it to supercritical CO₂ treatment, see e.g. [3]. In these cases, for pasteurization, the packaged product is inserted in a closed reactor filled with CO₂ that is brought to pressure and temperature necessary for the pasteurization. CO₂, while permeating the packaging, acts on microorganism and enzymes while inactivating them. However even such solution has some drawbacks. First of all the process does not solve the problem of food spoilage due to interaction with CO₂. Moreover, in order to prevent the packaging-- very fragile- from being damaged, the depressurization phase of the reactor has to occur in very long and controlled time. Finally a packaging permeable to gases does not allow the product to be preserved under controlled atmosphere, therefore the product shelf-life is reduced.

Therefore generally there is the need for a pasteurization process easy to be industrialized on large scale and that allows spoilage of food subjected to pasteurization process to be minimized.

Pasteurization processes are described in the following references:
[1].Linsey, et al. "High pressure carbon dioxide inactivation of microorganisms in foods: the past, the present and the future." International journal of food microbiology 117.1 (2007): 1-28.
[2]. US20120288614, describing a method for pasteurizing solid and semi-solid food. Food is introduced in a vessel, exposed to supercritical CO₂ to reduce microorganisms or enzymes, therefore supercritical CO₂ is removed at such a rate to maintain organoleptic integrity of the food.
[3]. US20080171116, describing the pasteurization of pre-packaged food using supercritical CO₂ at room temperature. Pasteurization is obtained with permeable packaging.
[4]. US20050186310, facing the problem of preserving food products while avoiding the use of high pressures, additives or chemical treatments. The process uses a combination of moderate pressures and reactive gases, such as carbon dioxide or nitric oxide to treat food products, and then removes the reactive gases by purging the food product with an inert gas.
[5]. US20030170356, describing a method of processing a substance, such as a food product, using a high pressure process, from 50MPa (MegaPascals) to 10000MPa. The method provides to insert in an enclosed environment the substance to be treated and one or more of the following gases: carbon monoxide, carbon dioxide, nitrogen, nitric oxide, nitrous oxide, hydrogen, oxygen, helium, argon, krypton, xenon and neon. The enclosed environment including the substance and at least one gas is subjected to high pressure processing and sealed in a container. The high pressure processing may occur prior to or after sealing the substance in the container.
[6]. WO 1999065342, describing a method for processing food, where food in subjected to a pressure of 3000 bar or more. The method comprises subjecting a food to an over pressure of carbon dioxide before applying high pressure stabilization treatment to reduce enzyme activity that produces, for example, off flavours.
[7]. Ferrentino, Giovanna, Sara Spilimbergo, and Alberto Bertucco. "High-Pressure Processing of Foods toward Their Industrialization and Commercialization: An Up-to-Date Overview." Functional Food Ingredients and Nutraceuticals: Processing Technologies 13 (2015): 427. This article describes HHP and HPCD (high pressure CO₂) processes.
[8]. Wang, Chung-Yi, et al. "Recent advances in food processing using high hydrostatic pressure technology." Critical reviews in food science and nutrition 56.4 (2016): 527-540. This article describes HHP processes.
[9]. Rivalain, Nolwennig, Jean Roquain, and Gérard Demazeau. "Development of high hydrostatic pressure in biosciences: Pressure effect on biological structures and potential applications in Biotechnologies." Biotechnology advances 28.6 (2010): 659-672.
[10]. Ferrentino, G., & Spilimbergo, S. (2011). High pressure carbon dioxide pasteurization of solid foods: current knowledge and future outlooks. Trends in Food Science & Technology, 22(8), 427-441.
[11]. Rawson, A., et al. "Application of supercritical carbon dioxide to fruit and vegetables: extraction, processing, and preservation." Food Reviews International 28.3 (2012): 253-276. This article describes parameters for microbial and enzymatic inactivation for HPCD process.
[12]. Garcia-Gonzalez, Linsey, et al. "High pressure carbon dioxide inactivation of microorganisms in foods: the past, the present and the future." International journal of food microbiology 117.1 (2007): 1-28. Article about inactivation of microorganisms following HPCD processes on several types of food.
[13]. Perrut, Michel. "Sterilization and virus inactivation by supercritical fluids (a review)." The Journal of Supercritical Fluids 66 (2012): 359-371.
[14]. Rao, Lei, et al. "Effect of High-pressure CO2 Processing on Bacterial Spores." Critical reviews in food science and nutrition just-accepted (2015): 00-00.
[15]. Garcia-Gonzalez, Linsey, et al. "Influence of type of microorganism, food ingredients and food properties on high-pressure carbon dioxide inactivation of microorganisms." International journal of food microbiology 129.3 (2009): 253-263. In this article the susceptibility towards HPCD treatments of several pathogens and microorganisms for food spoilage has been analysed.
[16]. Valverde, M. T., F. Marín-Iniesta, and L. Calvo. "Inactivation of Saccharomyces cerevisiae in conference pear with high pressure carbon dioxide and effects on pear quality." Journal of Food Engineering 98.4 (2010): 421-428. This article discloses that supercritical carbon dioxide causes inactivation of Saccharomyces Cerevisiae on fresh pears at different temperatures and pressures.
[17]. Zhou, Linyan, et al. "Effects of high-pressure CO2 processing on flavor, texture, and color of foods." Critical reviews in food science and nutrition 55.6 (2015): 750-768. This article discloses observations made for flavor, texture and color of food treated with high-pressure carbon dioxide.
[18]. Hu, Wanfeng, et al. "Enzyme inactivation in food processing using high pressure carbon dioxide technology." Critical reviews in food science and nutrition 53.2 (2013): 145-161. This article discloses the effect of HPCD processes on enzyme inactivation, in terms of treatment parameters such as temperature, pressure, treatment time, number of cycles, and combination with other techniques such as HPP.
[19]. Park, S-J., J-I. Lee, and J. Park. "Effects of a Combined Process of High-Pressure Carbon Dioxide and High Hydrostatic Pressure on the Quality of Carrot Juice." Journal of Food Science 67.5 (2002): 1827-1834. This article shows a two-phase process using supercritical CO₂ followed by HPP process.
[20]. Ferrentino, Giovanna, Sara Balzan, and Sara Spilimbergo. "Optimization of supercritical carbon dioxide treatment for the inactivation of the natural microbial flora in cubed cooked ham." International journal of food microbiology 161.3 (2013): 189-196. The article demonstrated the feasibility of HPCD on cooked ham. Moreover analyses of texture, Ph and color together with a storage study of the product were performed to determine its microbial and qualitative stability.
[21]. Bae, Yun Young, et al. "Application of supercritical carbon dioxide for microorganism reductions in fresh pork." Journal of Food Safety 31.4 (2011): 511-517.
[22]. Ji, Hongwu, et al. "Optimization of microbial inactivation of shrimp by dense phase carbon dioxide." International journal of food microbiology 156.1 (2012): 44-49.
[23]. de Lima Marques, Juliana, et al. "Antimicrobial activity of essential oils of Origanum vulgare L. and Origanum majorana L. against Staphylococcus aureus isolated from poultry meat." Industrial Crops and Products 77 (2015): 444-450.
[24]. Casas, J., et al. "MICROBIAL INACTIVATION OF PAPRIKA USING OREGANO ESSENTIAL OIL COMBINED WITH HIGH-PRESSURE CO 2." The Journal of Supercritical Fluids (2016). The article discloses that by combining natural additives it is possible to enhance microbial inactivation with HPCD processes.
[25]. Lee, Seung Yuan, et al. "Current topics in active and intelligent food packaging for preservation of fresh foods." Journal of the Science of Food and Agriculture 95.14 (2015): 2799-2810. The article discloses the use of intelligent food packaging and modified atmospheres for food preservation.
[26]. Ghidelli, Christian, and Maria B. Pérez-Gago. "Recent advances in modified atmosphere packaging and edible coatings to maintain quality of fresh-cut fruits and vegetables." Critical Reviews in Food Science and Nutrition just-accepted (2016): 00-00.
[27]. Zhang, Bao-Yu, et al. "Effect of atmospheres combining high oxygen and carbon dioxide levels on microbial spoilage and sensory quality of fresh-cut pineapple." Postharvest Biology and Technology 86 (2013): 73-84. The article deals with the importance of combining atmosphere for food preservation, particularly applied to pineapple.
[28]. Zhang, Bao-Yu, et al. "Effect of high oxygen and high carbon dioxide atmosphere packaging on the microbial spoilage and shelf-life of fresh-cut honeydew melon." International journal of food microbiology 166.3 (2013): 378-390. The article discloses how the use of atmosphere combining with CO₂ and O₂ can extend the shelf-life of melon.
[29]. Mendes, Rogério, et al. "Effect of CO 2 dissolution on the shelf life of ready-to-eat Octopus vulgaris." Innovative Food Science & Emerging Technologies 12.4 (2011): 551-561. The article deals with the importance of CO2 atmosphere on octopus shelf-life.
[30]. Wang, Li, et al. "Inactivation of Staphylococcus aureus and Escherichia coli by the synergistic action of high hydrostatic pressure and dissolved CO 2." International journal of food microbiology 144.1 (2010): 118-125. The article studies the synergistic effect of dissolved CO₂ with HHP (>250 MPa) in two successive phases: carbonatation and HPP.
[31]. Amanatidou, A., et al. "Effect of combined application of high pressure treatment and modified atmospheres on the shelf life of fresh Atlantic salmon." Innovative Food Science & Emerging Technologies 1.2 (2000): 87-98.
[32]. Al-Nehlawi, A., et al. "Synergistic effect of carbon dioxide atmospheres and high hydrostatic pressure to reduce spoilage bacteria on poultry sausages." LWT-Food Science and Technology 58.2 (2014): 404-411.
[33]. Spilimbergo, S., Komes, D., Vojvodic, A., Levaj, B., & Ferrentino, G. (2013). High pressure carbon dioxide pasteurization of fresh-cut carrot. The Journal of Supercritical Fluids, 79, 92-100.
[34]. MEUJO D A F ET AL: "Reducing oyster-associated bacteria levels using supercritical fluid CO2 as an agent of warm pasteurization", INTERNATIONAL JOURNAL OF FOOD MICROBIOLOGY, ELSEVIER BV, NL, vol. 138, no. 1-2, 31 March 2010 (2010-03-31), pages 63-70, ISSN: 0168-1605, DOI: 10.1016/JAFOODMICR0.2009.11.012
[35]. DATABASE BIOSIS [Online], BIOSCIENCES INFORMATION SERVICE, PHILADELPHIA, PA, US; May 2008 (2008-05), ZHONG QIXIN ET AL: "Nonthermal inactivation of Escherichia coli K-12 on spinach leaves, using dense phase carbon dioxide". [36]. GB 25 19 135 discloses a method of preparing foodstuffs in containers.

### OBJECTS AND SUMMARY OF THE INVENTION

In the light of the above, the problem at the base of the present invention is to improve known processes for food product pasteurization.

With regard to such a problem, an object of the present invention is to provide a pasteurization process that alters as little as possible the organoleptic properties of food being treated.

It is also an object of the present invention to provide a pasteurization process that is efficient and cheap and therefore easy to be industrialized.

These and other objects of the present invention will be more clear from the description below and from annexed claims, which are an integral part of the present description. The present invention is defined by the appended claims.

According to a first aspect, the invention therefore relates to a method for treating a food product that is inserted into a packaging, made of a material configured for containing a gas mixture, together with a gas mixture comprising at least carbon dioxide. Then a uniform pressure, between 4 MPa and 20 MPa is applied on the sealed packaging such to compress food. During application of pressure the packaging is maintained at a temperature between 25°C and 50°C.

As proved by experimental tests carried out on different food samples, both of animal and vegetable origin, this process is surprisingly efficacious both as regards microbial inactivation and as regards maintaining texture and color characteristics of the treated food. The efficacy of pasteurization, instead of being guaranteed by high pressures, is guaranteed by the particular range of temperatures and pressures that are such to maintain carbon dioxide in a supercritical state or close to the supercritical state. At the same time the process can be performed with limited costs since the pressures involved, lower than 20 MPa, do not require too much expensive equipment as those of high hydrostatic pressures (HHP) and in comparison to known supercritical CO₂ techniques there is a reduction in CO₂ consumption higher than 98%.

In a preferred embodiment process pressures and temperatures are selected such to maintain carbon dioxide in a supercritical state (therefore pressure higher than 7.38 MPa and temperature higher than 31°C), such to improve the microbial inactivation effect.

Advantageously an antioxidant agent, preferably natural one, can be added to the gas mixture in the packaging. For example ascorbic acid (vitamin C or the like) can be possibly inserted in the packaging in order to obtain a synergistic effect for microbial inactivation.

In one embodiment the amount of carbon dioxide in the mixture is between 5% and 100% by volume or mass. When carbon dioxide is not equal to 100%, the mixture further comprises one or more of the gases included in the group consisting of air, nitrogen, oxygen, carbon monoxide, nitrogen dioxide.

This type of mixtures is useful not only for allowing pasteurization process but also preservation of food inside the packaging, thus extending the shelf-life of the packaged product.

In one embodiment, pressure and temperature are applied in a variable manner over time to maintain carbon dioxide in the supercritical state.

### BRIEF DESCRIPTION OF THE DRAWINGS

Further characteristics and advantages of the present invention will be more clear from the following detailed description of some preferred embodiments thereof, with reference to annexed drawings.

The different characteristics in the individual arrangements can be combined with one another as one desires according to the above description, if advantages specifically resulting from one particular combination should be used.

In these drawings,
- figures 1a to 1f are different steps of the pasteurization process according to the invention;
- figure 2 is a flow chart of the process shown in figures 1a-1f;
- figure 3 is a chart showing data about microbial inactivation for mesophilic bacteria (right) and yeasts and molds (left) on cut carrot samples treated by the method of figure 2, and in samples treated in different manner or untreated samples;
- figure 4 is the results of shelf-life studies for mesophilic bacteria (chart on the left) and for yeasts and molds (chart on the right);
- figure 5 is a chart showing data about microbial inactivation for yeasts and molds (left), mesophilic bacteria (center) and mesophilic spores (right) on coriander leaves treated by the method of figure 2, and in samples treated in different manner;
- figure 6 is a chart showing data of the reduction of *Lysteria monocytogens* in samples of coriander treated by the method of figure 2, and in samples treated in different manner or untreated samples;
- figure 7 is a chart showing data about microbial inactivation for mesophilic bacteria on pear samples treated by the method of figure 2 at different temperature and treatment time;
- figure 8 is a chart showing data about microbial inactivation for yeasts and molds on pear samples treated by the method of figure 2 at different temperature and treatment time;

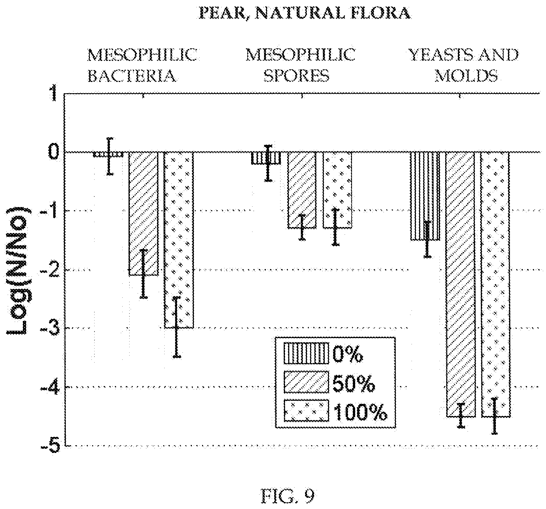

- figure 9 is a chart showing data about microbial inactivation for mesophilic bacteria (left), mesophilic spores (center) and yeasts and molds (right) on pear samples treated by the method of figure 2 at different concentrations of CO₂ in a mixture with nitrogen.

### DETAILED DESCRIPTION OF THE INVENTION

In the following description, to disclose the figures like reference numerals or symbols are used to denote constructional elements with the same function. Moreover, for purposes of clarity, some references may not be repeated in all the figures.

While the invention is susceptible of various modifications and alternative constructions, some preferred embodiments are shown in the drawings and will be described in details herein below. It should be understood, however, that there is no intention to limit the invention to the specific disclosed embodiment but, on the contrary, the invention intends to cover all the modifications, alternative constructions and equivalents that fall within the scope of the invention as defined in the claims.

The use of "for example", "etc.", "or" denotes non-exclusive alternatives without limitation, unless otherwise noted. The use of "comprises" and "includes" means "comprises or includes, but not limited to", unless otherwise noted.

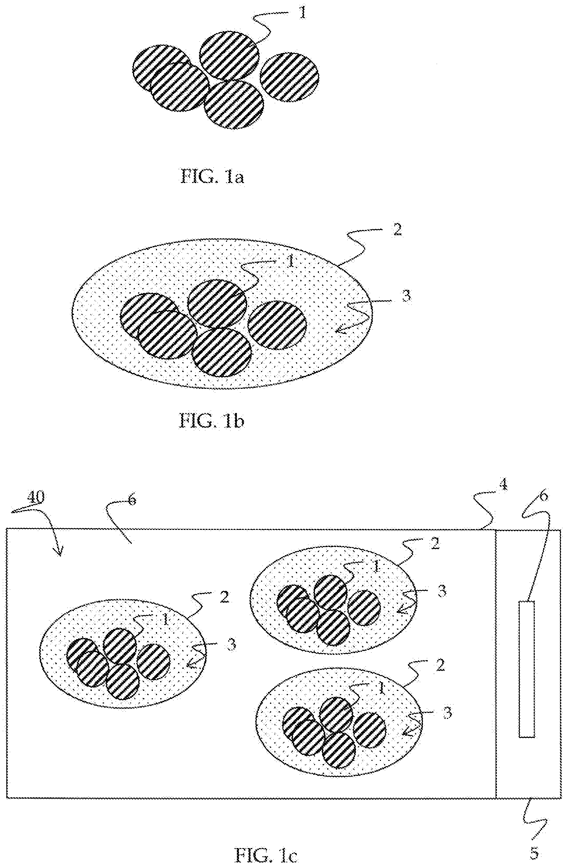

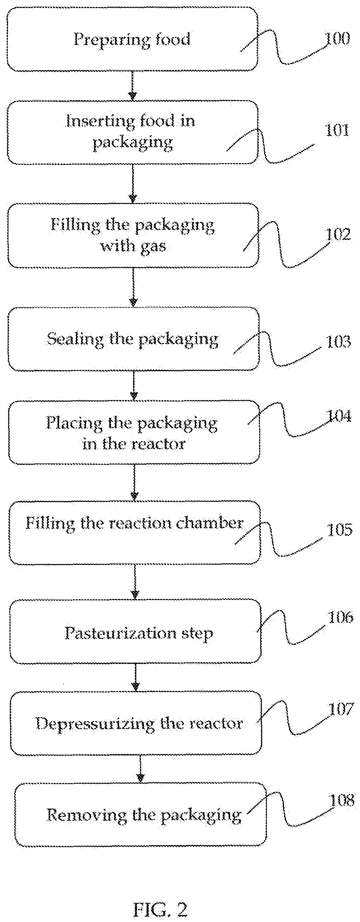

With reference to figures 1a-1f and 2, a pasteurization process according to a preferred embodiment of the invention is described herein below.

The process begins at step 100, fig. 1a, where food 1 is taken for being packaged. Food can be previously subjected to cut processes for excluding some parts or for providing a shape more suitable for use thereof (for instance cubes, rhombus, spheres, sticks etc.).

Then, step 101, food is inserted into a packaging 2 composed, partially or completely, of a flexible film. The packaging is made of a material configured for containing a gas mixture that is able to form a barrier substantially impermeable to gases and vapors of the mixture, and it can have various dimensions and volumes ranging from 0,1mL (milliliters) to 100 L (liters) depending on the amount of food to be treated. As the material suitable for containing the gas mixture it is known to use, individually or coupled as a multilayer, for instance plastic polymer films (polyethylene-PE, polypropylene-PPE, polyethylene terephthalate- PET), aluminum, paper.

Once food is inserted in the packaging, the latter is filled with (step 102) carbon dioxide in a mixture ranging from 5% to 100% (by volume or by mass) with other gases such as air, nitrogen, oxygen, carbon monoxide, nitrogen dioxide, etc. Packaging process preferably occurs at room temperature or anyway at such a temperature and pressure to maintain gases, that have to be inserted in the packaging, in the gaseous state.

In one embodiment, an antioxidant agent, preferably natural, is added to the gas mixture. For instance ascorbic acid (vitamin C or the like) in liquid or solid form can be possibly inserted in the packaging.

Then packaging 2 is sealed (step 103, fig.1b) such to hold food 1 and gas mixture 3 therein.

The sealed packaging 2 is inserted (step 104, fig.1c) in a reactor 4 - that is a container provided with a reaction chamber 40 where chemical reaction processes take place - able to withstand pressures of 30 Mpa. To this end, the reactor can be made partially or completely of metal (steel or other alloy) or other organic or inorganic material able to withstand employed pressures.

In the preferred embodiment, the reactor 4 is equipped with a heating system 5 comprising a heating jacket, namely a gap formed along one or more of the walls of the reaction chamber, wherein heating means 6 are placed to heat the interior of the reactor. By way of example, heating means can comprise a thermal fluid or an electrical resistance that, being placed inside the heating jacket, heat one of the walls of the reaction chamber, such to heat food placed inside the reactor. As an alternative, heating means can comprise means intended to generate an electromagnetic field or ultrasounds. These means radiate the interior of the reactor while heating food therein.

By means of the heating system the temperature inside the reactor is controlled depending on process needs. For instance, the heating system can be configured to maintain temperature as constant or to change it depending on other process parameters, such as time or pressure inside the reactor. Preferably for the pasteurization process described herein, temperature is preferably kept below 50°C, such to prevent thermosensitive molecules of food from being altered, such as vitamins or proteins.

In order to regulate the temperature inside the reaction chamber 40, the reactor 4 is equipped with a pump and a pipe system (not shown in the figure) that allow a incompressible working fluid 41 to be loaded and unloaded, for example water, used for the treatment step. Suitable on-off and throttling valves (not shown in figures) allow loading and unloading operations to be controlled. Advantageously such valves are electronically controlled by a control unit of the reactor, however they can be manually controlled by the use of pressure gauges showing the operator the pressure inside the reaction chamber.

Once sealed packaging that contains food 1 and gas mixture 3 is inserted, the reaction chamber 40 is closed and sealed. To this end the reactor is equipped with members for tightly closing the reaction chamber, that can comprise flanged members, threaded members etc.

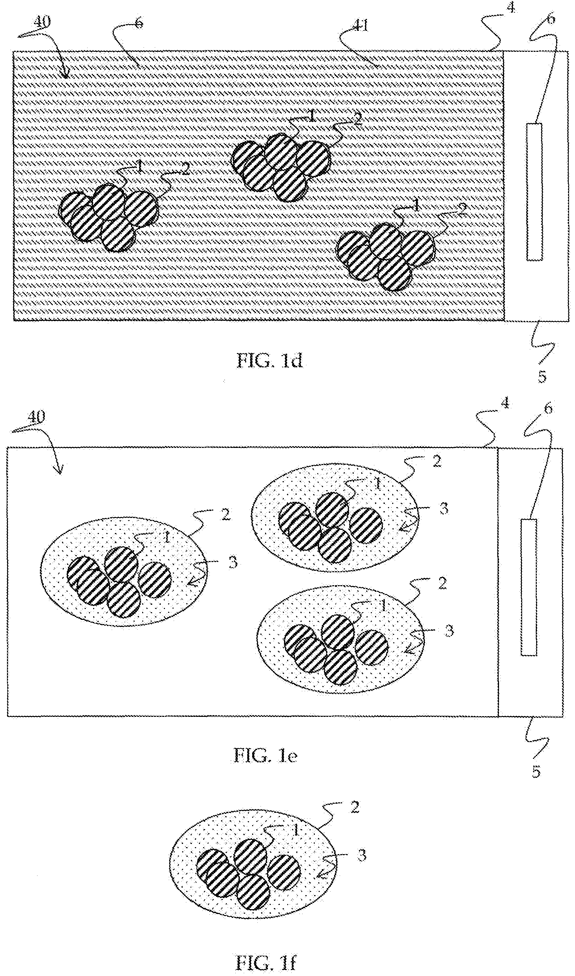

Now the reaction chamber 40 is filled (step 105) with the working fluid and food pasteurization cycle begins (step 106, fig.1d). In details, the pasteurization cycle provides to set a constant or variable hydrostatic pressure, from 4 to 20 MPa while the temperature inside the reaction chamber 40 is kept at a temperature from 25°C to 50°C. Preferably the pasteurization cycle provides to maintain, inside the reaction chamber, such temperature and pressure conditions to maintain carbon dioxide, present inside the packaging, in a supercritical state. Therefore, while observing the maximum values of pressure and temperature mentioned above, the reaction chamber is maintained at a temperature higher than 31°C and at a pressure higher than 7.38 Mpa.

The duration of the pasteurization cycle changes depending on food to be treated, and generally it is from 5 minutes to 3 hours. As regards vegetable products the duration of the pasteurization cycle preferably is from 5 to 60 minutes.

In one embodiment, the increase of the pressure in the reaction chamber 40 occurs by using the loading pump, or by hydraulic force of one or more of the walls of the reaction chamber.

At the end of the pasteurization cycle the reactor is depressurized (step 107, fig.1e) for example by opening a throttling valve, till reaching room pressure or an intermediate pressure between the room pressure and the final treatment pressure.

At the end of the treatment the reactor is opened and the packaging 2 is removed (step 108 fig.1f) and subjected to drying for being later preserved at suitable temperature.

In the light of the above it is clear how the pasteurization process described above allows an efficacious food pasteurization to be obtained by a reactor simple to be manufactured and that can be made as semi-continuous. The results of experimental tests, that prove the efficacy of the pasteurization process described above, are shown in the examples of the experimental tests below.

It is also clear that many variants can be made to the embodiments described above by way of example of the invention defined in the annexed claims.

For example in one embodiment instead of providing heating means to control the temperature inside the reaction chamber it is possible to provide a system heating the working fluid. In this embodiment, the working fluid that is supplied in the reaction chamber is heated before being loaded in the reaction chamber.

Again in one embodiment the pasteurization method can provide several pasteurization cycles, each pasteurization cycle being characterized by different pressure and temperature curves that are applied to the packaging/packages present in the reactor.

### EXPERIMENTAL TESTS

### EXAMPLE 1 - CARROTS

Experimental tests were carried out on cut carrot samples that were inserted in a packaging made of a material configured for containing a gas mixture together with a gas mixture comprising 100% of CO₂. For each test about 3 grams of sample were packaged with about 100 mL of CO₂. Closed packaging was maintained in the reaction chamber at 120 bar (about 12 Mpa), 40°C for 15 minutes.

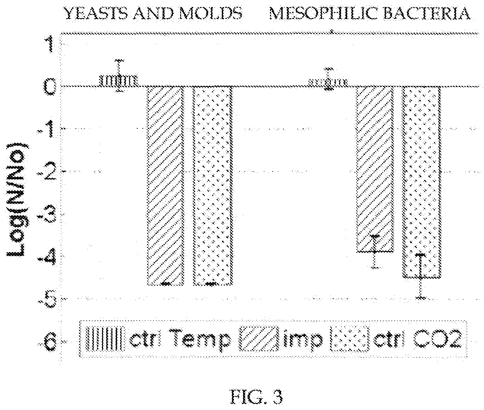

Fig.3 illustrates a chart showing the microbial inactivation of mesophilic bacteria and yeasts and molds on cut carrot samples to compare inactivation obtained during the conventional process such as shown in the study published by Spilimbergo et al., 2013. In details, bars "ctrlTemp" show population of Yeasts and Molds (left) and of mesophilic bacteria (right) respectively in a control sample kept at the same temperature conditions for the all duration of the treatment. Central bars "imp" are the population of Yeasts and Molds (left) and mesophilic bacteria (right) respectively in a sample treated by the pasteurization process according to the invention. The bars "ctrlCO2" are the population of Yeasts and Molds (left) and mesophilic bacteria (right) respectively in a sample treated by the process of Spilimbergo et al., 2013, [33].

As seen in figure 3, the pasteurization process described herein is able to inactivate microorganisms in a manner similar to conventional process of Spilimbergo (that provides the direct contact of food with CO₂ at supercritical state). Unlike the latter, however, the process of the invention avoids contamination risk due to the packaging step that, in Spilimbergo process, has to follow pasteurization process. Moreover the use of the amount of CO₂ is considerably reduced that, for the same amount of product, is reduced from about 9.45 g for the reactor of the process of Spilimbergo et al., 2013 to about 0.18 g by the method of figure 2, corresponding to a reduction higher than 98% CO₂.

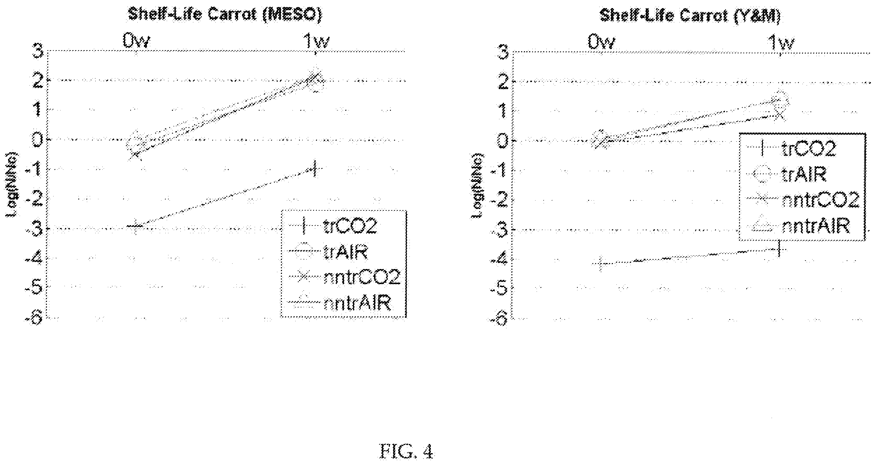

On the contrary figure 4 shows results of shelf-life studies at 7 days. On the left the shelf-life for mesophilic bacteria is shown, while on the right for yeasts and molds. The figure shows, in logarithmic scale, the values of the ratio N/N0, where N is the number of colonies after the treatment, and N0 the number of colonies of the fresh sample before the treatment. Data are normalized with respect to the untreated fresh sample. Figure 4 shows data obtained for four types of treatments: trCO2 refers to a sample treated in CO₂ atmosphere and packaging kept at 120 bar, 40°C for 15 minutes of treatment. trAIR refers to a sample treated under ambient air atmosphere at 120 bar, 40°C for 15 minutes. nntr AIR refers to a untreated sample preserved under ambient air atmosphere. nntrCO₂ refers to untreated sample preserved under atmosphere at 100% of CO₂ at atmospheric pressure.

The figure shows that, after 7 days, the samples treated with the pasteurization method described above have a bacterial load still lower than the one of the product before the treatment. The same figure further shows that mere pressure and temperature do not have any effects on microbial reduction and they show a behavior similar to the several samples preserved without being treated. Likewise, the mere atmosphere at 100% of CO₂ at atmospheric pressure does not have any effect on inactivation of mesophilic bacteria and on molds.

Finally carrot samples treated in these experimental tests exhibited, at the end of the treatment, an aspect and a texture very similar to that of untreated samples.

### EXAMPLE 2 - CORIANDER LEAVES

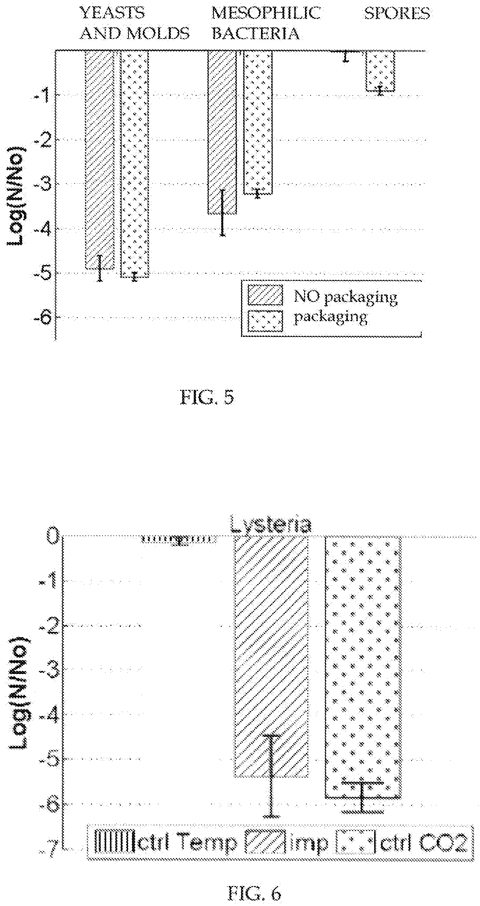

Further experimental tests were carried out on coriander leaves that were inserted in a packaging made of a material configured for containing a gas mixture together with a gas mixture comprising 100% of CO₂. For each test about 1 gram of sample was packaged with about 100 mL of gas. Closed packaging was maintained in the reaction chamber at 100 bar (about 10 Mpa), 40°C for 10 minutes. Fig.5 illustrates a chart showing the microbial inactivation for mesophilic bacteria and yeasts and molds on coriander samples to compare inactivation obtained during the conventional process where supercritical CO₂ was placed in direct contact with the sample likewise the case of carrot in the study of Spilimbergo et al., 2013, [33].

Experimental tests carried out on coriander samples, further show the efficacy of the method on the reduction of pathogenic microorganisms. Particularly figure 6 shows data of the reduction of *Lysteria monocytogens* composed of a cocktail composed, ratio 1:1:1, of three strains LMG23192, LMG23194 and LMG2648 respectively. The sample was inoculated such to obtain a starting contamination of 5.85±0.33 log. Such as in figure 3, also in this case the reference "imp" denotes the results of measurements in a sample inserted in a sealed packaging with a mixture of 100% CO₂ at 100bar 40°C for 10 minutes, according to the method of figure 2. The reference ctrlCO2 shows the data of measurements taken on a control sample inserted in the reactor without the packaging and treated according to conventional procedure that provides to insert supercritical CO₂ directly in the pasteurization reactor likewise the study about carrot by Spilimbergo et al. 2013 [33], under the same conditions (100bar 40°C for 10 minutes). The reference ctrlTemp shows the results of measurements taken on a control sample maintained at atmospheric pressure under the same temperature conditions of the process (40°C) for all the duration of the treatment.

### EXAMPLE 3 - PEAR PIECES

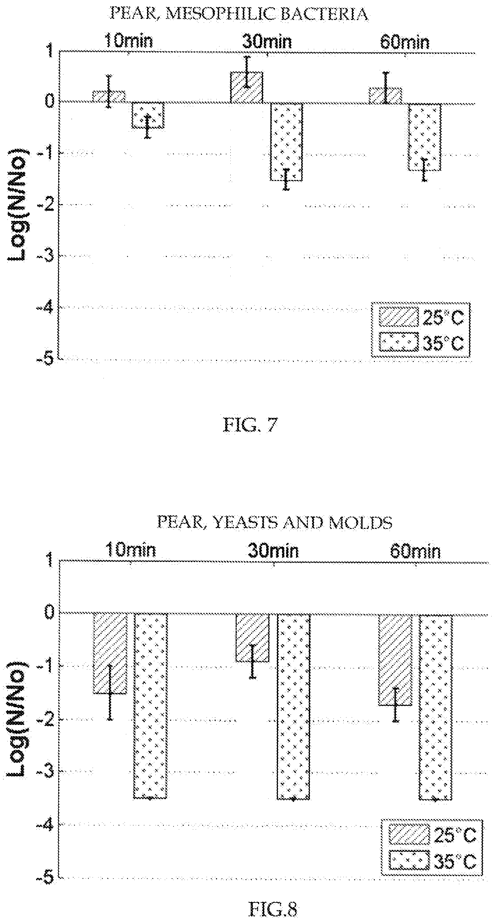

Additional experimental confirmations were carried out on pear pieces inserted in a packaging made of a material suitable for containing a gas mixture together with a gas mixture comprising 100% of CO₂. For each experiment about 1 gram of sample was packaged with about 100 mL of gas. Closed packaging was maintained inside the reaction chamber at 100 bar (about 10 MPa). Different temperatures and treatment time were analyzed. Figs. 7 and 8 show inactivation of mesophilic bacteria and yeasts and molds respectively at different treatment time (10, 30 and 60 minutes), and for two different temperatures (25°C and 35°C) below and above the critical point of CO₂ respectively. From this study it results that for both the microorganisms the inactivation occurs substantially only upon exceeding critical conditions of CO₂. Moreover it shows that over 30 minutes of treatment under the described conditions, there is no substantial increase in inactivation for mesophilic bacteria.

Further experiments were carried out with different mixtures of nitrogen and carbon dioxide. Fig.7 shows a chart indicating the microbial inactivation for mesophilic bacteria, mesophilic spores and yeasts and molds on cut pear samples treated after being inserted in packaging made of a material configured for containing a gas mixture together with a gas mixture composed of N₂ and CO₂ at 0.50 and 100% of CO₂ respectively after a treatment at 100bar (about 10 MPa), 35°C for 30 minutes. From this study it results that CO₂ is fundamental for inactivation of microorganisms and if another gas is used the mere pressure and temperature do not have any effects on microorganism inactivation. Moreover it results that inactivation occurs also for gas mixtures having CO₂ in a percentage lower than 100%, but such to guarantee a bactericidal action of CO₂.

### EXAMPLE 4 - OTHER FOODS

Other experimental tests, like those carried out for carrots, coriander and pear, were performed on apple pieces, coconut pieces, strawberry pieces, entire French beans, avocado pieces, entire grapefruit, entire currant, kiwi pieces, chicken, cooked ham, Parma ham, codfish and shrimp. Results demonstrated the efficacy of the provided pasteurization process as regards microbial inactivation and preservation of organoleptic properties and texture/color characteristics of the treated food.

## Claims

1. A method for treating food comprising the steps of:
- inserting (101,102) a food product and a gas mixture at least comprising carbon dioxide into a packaging, said packaging being made of a material configured for containing said gas mixture;
- then sealing (103) the packaging such to hold the food (1) and the gas mixture (3) therein;
- then uniformly applying (106) a pressure to the sealed packaging such as to compress the packaging, the gas mixture and the food product inside of it;
wherein
the pressure applied to the sealed packaging is comprised between 4 MPa and 20 MPa and in that during application of the pressure, the sealed packaging is maintained at a temperature between 25 ° C and 50 ° C.

2. Method according to claim 1, wherein a pressure is applied and a temperature is maintained during operation, such as to maintain the carbon dioxide in a supercritical state.

3. Method according to claim 1 or 2, wherein the amount of carbon dioxide in the gas mixture is comprised between 5% and 100% by volume or mass.

4. Method according to claim 1 or 2 or 3, wherein the gas mixture further comprises one or more of the gases included in the group consisting of air, nitrogen, oxygen, carbon monoxide, nitrogen dioxide.

5. Method according to any of the preceding claims, wherein the pressure is applied in a variable manner over time.

6. Method according to any of the preceding claims, wherein said pressure is applied to the packaging for a time comprised between 5 minutes and 3 hours.

7. Method according to any of the preceding claims, wherein the temperature is varied during application of the pressure to the sealed packaging.

8. Method according to any of the preceding claims, wherein the sealed packaging is inserted into a watertight reactor provided with a liquid loading and unloading system, and wherein the method provides for charging a liquid in the reactor up to reaching said pressure.

9. Method according to claim 8, wherein the liquid contained in the reactor is heated by means of an electrical resistance, or by applying an electromagnetic field or by applying ultrasound.

10. Method according to claim 8, wherein the reactor is provided with a heating jacket, and wherein the liquid contained in the reactor is heated by flowing a heating liquid inside the heating jacket.

11. Method according to any of the preceding claims, wherein a plurality of pasteurization cycles are performed, each pasteurization cycle being **characterized by** different pressure and temperature curves that are applied.

12. Method according to any of the preceding claims, wherein the packaging comprises a natural antioxidant, in particular ascorbic acid.

## Patentansprüche

1. Verfahren zum Behandeln von Lebensmitteln, umfassend die folgenden Schritte:
- Einführen (101, 102) eines Lebensmittelprodukts und eines Gasgemischs, welches zumindest Kohlendioxid umfasst, in eine Verpackung, wobei die genannte Verpackung aus einem Material hergestellt ist, das für die Aufnahme des genannten Gasgemischs ausgebildet ist;
- danach Versiegeln (103) der Verpackung, so dass das Lebensmittel (1) und das Gasgemisch (3) darin enthalten sind;
- dann gleichmäßiges Ausüben (106) eines Drucks an die versiegelte Verpackung, um die Verpackung, das Gasgemisch und das darin enthaltene Lebensmittel zu komprimieren;
wobei
der auf die versiegelte Verpackung ausgeübte Druck zwischen 4 MPa und 20 MPa liegt und die versiegelte Verpackung während der Ausübung des Drucks auf einer Temperatur zwischen 25° C und 50° C gehalten wird.

2. Verfahren nach Anspruch 1, wobei während des Betriebs ein Druck ausgeübt und eine Temperatur aufrechterhalten wird, so dass das Kohlendioxid in einem überkritischen Zustand gehalten wird.

3. Verfahren nach Anspruch 1 oder 2, wobei die Menge an Kohlendioxid in dem Gasgemisch zwischen 5 % und 100 % des Volumens oder der Masse beträgt.

4. Verfahren nach Anspruch 1 oder 2 oder 3, wobei das Gasgemisch außerdem eines oder mehrere der Gase aus der Gruppe Luft, Stickstoff, Sauerstoff, Kohlenmonoxid und Stickstoffdioxid enthält.

5. Verfahren nach einem der vorhergehenden Ansprüche, wobei der Druck über die Zeit variabel ausgeübt wird.

6. Verfahren nach einem der vorhergehenden Ansprüche, wobei der Druck auf die Verpackung für eine Zeit zwischen 5 Minuten und 3 Stunden ausgeübt wird.

7. Verfahren nach einem der vorhergehenden Ansprüche, wobei die Temperatur während des Ausübens des Drucks auf die versiegelte Verpackung variiert.

8. Verfahren nach einem der vorhergehenden Ansprüche, wobei die versiegelte Verpackung in einen wasserdichten Reaktor eingeführt wird, welcher mit einem Flüssigkeitsbe- und - entladesystem versehen ist, und wobei das Verfahren das Einfüllen einer Flüssigkeit in den Reaktor bis zum Erreichen des genannten Drucks vorsieht.

9. Verfahren nach Anspruch 8, wobei die im Reaktor enthaltene Flüssigkeit durch einen elektrischen Widerstand oder durch Anlegen eines elektromagnetischen Feldes oder durch Anlegen von Ultraschall erhitzt wird.

10. Verfahren nach Anspruch 8, wobei der Reaktor mit einem Heizmantel versehen ist und wobei die im Reaktor enthaltene Flüssigkeit durch Strömen einer Heizflüssigkeit innerhalb des Heizmantels erhitzt wird.

11. Verfahren nach einem der vorhergehenden Ansprüche, wobei eine Vielzahl von Pasteurisierungszyklen durchgeführt wird, wobei jeder Pasteurisierungszyklus durch unterschiedliche Druck- und Temperaturkurven gekennzeichnet ist, die angewendet werden.

12. Verfahren nach einem der vorhergehenden Ansprüche, wobei die Verpackung ein natürliches Antioxidans, insbesondere Ascorbinsäure, umfasst.

## Revendications

1. - Procédé de traitement d'aliments, comprenant les étapes consistant à :
- introduire (101,102) un produit alimentaire et un mélange gazeux comprenant au moins du dioxyde de carbone dans un emballage, ledit emballage étant constitué d'un matériau configuré pour contenir ledit mélange gazeux ;
- puis sceller (103) l'emballage de façon à y maintenir les aliments (1) et le mélange gazeux (3) ;
- puis appliquer de façon uniforme (106) une pression à l'emballage scellé de façon à comprimer l'emballage, le mélange gazeux et le produit alimentaire à l'intérieur de celui-ci ;
dans lequel
la pression appliquée à l'emballage scellé est comprise entre 4 MPa et 20 MPa et, pendant l'application de la pression, l'emballage scellé est maintenu à une température entre 25°C et 50°C.

2. - Procédé selon la revendication 1, dans lequel une pression est appliquée et une température est maintenue pendant l'opération, de façon à maintenir le dioxyde de carbone dans un état supercritique.

3. - Procédé selon l'une des revendications 1 ou 2, dans lequel la quantité de dioxyde de carbone dans le mélange gazeux est comprise entre 5% et 100% en volume ou en masse.

4. - Procédé selon l'une des revendications 1 ou 2 ou 3, dans lequel le mélange gazeux comprend en outre un ou plusieurs des gaz compris dans le groupe consistant en air, azote, oxygène, monoxyde de carbone, dioxyde d'azote.

5. - Procédé selon l'une quelconque des revendications précédentes, dans lequel la pression est appliquée d'une manière variable au cours du temps.

6. - Procédé selon l'une quelconque des revendications précédentes, dans lequel ladite pression est appliquée à l'emballage pendant une durée comprise entre 5 minutes et 3 heures.

7. - Procédé selon l'une quelconque des revendications précédentes, dans lequel on fait varier la température varie pendant l'application de la pression à l'emballage scellé .

8. - Procédé selon l'une quelconque des revendications précédentes, dans lequel l'emballage scellé est introduit dans un réacteur étanche à l'eau comportant un système de chargement et de déchargement de liquide, et dans lequel le procédé assure le chargement d'un liquide dans le réacteur jusqu'à atteindre ladite pression.

9. - Procédé selon la revendication 8, dans lequel le liquide contenu dans le réacteur est chauffé au moyen d'une résistance électrique, ou par l'application d'un champ électromagnétique ou par l'application d'ultrasons.

10. - Procédé selon la revendication 8, dans lequel le réacteur comporte une chemise chauffante, et dans lequel le liquide contenu dans le réacteur est chauffé par l'écoulement d'un liquide chauffant à l'intérieur de la chemise chauffante.

11. - Procédé selon l'une quelconque des revendications précédentes, dans lequel plusieurs cycles de pasteurisation sont effectués, chaque cycle de pasteurisation étant **caractérisé par** les différentes courbes de pression et de température qui sont appliquées.

12. - Procédé selon l'une quelconque des revendications précédentes, dans lequel l'emballage comprend un antioxydant naturel, en particulier l'acide ascorbique.
